**Europäisches Patentamt**

**European Patent Office**

**Office européen des brevets**

(19)

(11) Veröffentlichungsnummer: **0 195 100**
**B1**

(12) **EUROPÄISCHE PATENTSCHRIFT**

(45) Veröffentlichungstag der Patentschrift:
**31.05.89**

(51) Int. Cl.⁴: **E 21 B 47/12, H 04 L 5/16**

(21) Anmeldenummer: **85103220.1**

(22) Anmeldetag: **20.03.85**

(54) Verfahren und Vorrichtung zur Datenübertragung zwischen einer in einem Bohrloch angeordneten Sende- und Empfangseinrichtung und einer über Tage angeordneten Sende- und Empfangseinrichtung.

(43) Veröffentlichungstag der Anmeldung:
**24.09.86 Patentblatt 86/39**

(45) Bekanntmachung des Hinweises auf die Patenterteilung:
**31.05.89 Patentblatt 89/22**

(84) Benannte Vertragsstaaten:
**AT BE CH DE FR GB IT LI LU NL SE**

(56) Entgegenhaltungen:
**US-A-3 187 301**
**US-A-3 309 657**
**US-A-3 828 313**
**US-A-4 388 716**

(73) Patentinhaber: **Schilling, Hans- Joachim, Valterweg 10, D-6239 Eppstein 3 (DE)**

(72) Erfinder: **Wondrak, Thomas c/o KEIL & SCHAAFHAUSEN, Ammelburgstrasse 34, D-6000 Frankfurt am Main 1 (DE)**

(74) Vertreter: **Schaafhausen, Ludwig Richard, Dipl.- Phys., KEIL & SCHAAFHAUSEN Patentanwälte Eysseneckstrasse 31, D-6000 Frankfurt am Main 1 (DE)**

EP 0 195 100 B1

**Beschreibung**

Die Erfindung bezieht sich auf ein Verfahren und eine Vorrichtung zur Datenübertragung zwischen einer in einem Bohrloch angeordneten Sende- und Empfangseinrichtung und einer über Tage angeordneten Sende- und Empfangseinrichtung in beiden Übertragungsrichtungen über eine Zweidrahtleitung in einem Kabel.

Ein derartiges Verfahren und eine Vorrichtung sind aus der US-A-3 187 301 bekannt. Bei der bekannten Vorrichtung hat das Kabel eine Vielzahl von Leitungen, die gegeneinander und gegen einen äußeren Schirm isoliert sind. Zwei der Leitungen sowie der äußere Schirm des Kabels werden nur für die Energieübertragung von der über Tage angeordneten Sende- und Empfangseinrichtung zu der unter Tage angeordneten Sende- und Empfangseinrichtung benutzt.

Aus der US-A-3 828 313 sind auch ein Verfahren und eine Vorrichtung zur Datenübertragung zwischen einer Zentrale und zahlreichen Unterstationen bekannt. Die Zentrale und die Unterstationen sind gemeinsam an drei Leitungen angeschlossen. Eine Leitung ist für die zeitmultiplexe Übertragung von Daten zwischen der Zentrale und den Unterstationen bestimmt. Auf der zweiten Leitung werden Taktimpulse für die Synchronisierung der Zentrale und der Unterstationen übertragen. Mit den Taktimpulsen wird zugleich die Energie für den Betrieb der Sende- und Empfangseinrichtungen in den Unterstationen übertragen. Die dritte Leitung ist die gemeinsame Rückleitung für die Daten und die Taktimpulse.

Bei sehr tiefen Bohrlöchern werden Kabel von z. B. mehr als 10 000 m Länge benötigt, wodurch die übertragenen Signale stark gedämpft werden. Deshalb wären in bestimmten Abständen Zwischenverstärker notwendig.

Der Erfindung liegt daher die Aufgabe zugrunde, ein Verfahren und eine Vorrichtung der eingangs genannten Art derart weiterzuentwickeln, daß nur zwei Leitungen zwischen der über Tage und der unter Tage angeordneten Sende- und Empfangseinrichtung und keine Zwischenverstärker notwendig sind.

Diese Aufgabe wird für das Verfahren erfindungsgemäß dadurch gelöst, daß das Kabel nur eine Zweidrahtleitung aufweist, über die die Daten und die zum Betrieb notwendige Energie zu der im Bohrloch angeordneten Sende- und Empfangseinrichtung während aufeinanderfolgender, im wesentlichen stromführender Zeitabschnitte, die von im wesentlichen stromlosen Zeitabschnitten getrennt sind, übertragen werden, daß während der stromführenden Zeitabschnitte ein Teil der übertragenen Energie in der im Bohrloch angeordneten Sende- und Empfangseinrichtung für die stromlosen Zeitabschnitte gespeichert wird, und daß die Daten von der im Bohrloch angeordneten Sende- und Empfangseinrichtung zu der über Tage angeordneten Sende- und Empfangseinrichtung durch Unterbrechung des Stromflusses in der Zweidrahtleitung oder durch Kurzschließen der Enden der Zweidrahtleitung und in umgekehrter Richtung durch Unterbrechung des in die Zweidrahtleitung eingespeisten Stroms übertragen werden. Mit diesem Verfahren wird auch bei großen Temperaturunterschieden in den verschiedenen Kabelabschnitten sowie bei unterschiedlichen Impedanzen aufgrund der auf der Winde aufgewickelten und der von der Winde abgewickelten Kabelabschnitte mit sehr geringem Aufwand eine wenig störanfällige Übertragung erreicht. Es werden nur digitale Signale übertragen, die aus Impulsen und Impulspausen bzw. Impulsen mit stark unterschiedlichen Amplituden bestehen.

Vorzugsweise werden die Daten auf der Zweidrahtleitung pulscodemoduliert übertragen, um eine möglichst geringe Störanfälligkeit zu erreichen.

Für die Vorrichtung der eingangs genannten Art wird die Aufgabe erfindungsgemäß dadurch gelöst, daß in der über Tage angeordneten Sende- und Empfangseinrichtung zumindest zwischen einem Pol der Energiequelle und einer Leitung der Zweidrahtleitung ein von einer Steuer- und Auswerteinrichtung betätigbarer Schalter und zumindest zwischen einem Pol der Energiequelle und einer Leitung der Zweidrahtleitung ein mit einem Schwellwertdetektor verbundener Stromfühler angeordnet sind, daß in der im Bohrloch angeordneten Sende- und Empfangseinrichtung zumindest zwischen dem Ende einer Leitung der Zweidrahtleitung und einer Diode, die mit einem Kondensator und einem Betriebsspannungsanschluß für die Verbraucher in der Sende- und Empfangseinrichtung verbunden ist, ein weiterer Schalter oder zwischen den Enden der Zweidrahtleitung ein Schalter angeordnet ist, daß die Schalter von einer Steuer- und Auswerteinrichtung betätigbar sind und daß mit zumindest einer Leitung ein Schwellwertdetektor verbunden ist. Die Impulse können daher mit einfachen schaltungstechnischen Mitteln gesendet und diskriminiert werden. Vorteilhafterweise sind die Schalter dabei kontaktlos ausgebildet.

Gemäß einer bevorzugten Ausführungsform der Erfindung sind die Schalter Darlington-Transistoren, die jeweils mit einem von der Steuer- und Auswerteinrichtung gespeisten Feldeffekttransistor verbunden sind. Für die Betätigung der Schalter sind deshalb nur geringe Steuerströme notwendig.

Anstelle der Darlington-Transistoren können auch Leistungsfeldeffekttransistoren eingesetzt werden. Es ist möglich, p-Kanal-Mosfets zu verwenden, die Nennströme von 10 A bei 300 V Nennspannung haben.

Gemäß einer weiteren Ausgestaltung des Erfindungsgedankens ist der Stromfühler in der über Tage angeordneten Sende- und Empfangseinrichtung ein Widerstand, der mit einer Impulsformeinrichtung verbunden ist. Zu dem Widerstand kann ein Potentiometer parallel geschaltet sein, dessen Abgriff anstelle des Widerstandes mit der Impulsformeinrichtung verbunden ist.

Die Zweidrahtleitung ist zweckmäßigerweise ein armiertes Stahlseil mit einem isolierten Kupferleiter. Das eine Ende des Stahlseils, an dem die eine Sende- und Empfangseinrichtung befestigt ist, befindet sich im Bohrloch. Ein solches Stahlseil ist notwendig, um auch bei großen Bohrlochtiefen sowohl das Eigengewicht des Kabels als auch das Gewicht der Sende- und Empfangseinrichtung und der damit verbundenen Meßwertgeber zu tragen. Dieses Stahlseil bildet einen Übertragungskanal mit ungünstigen Übertragungseigenschaften. Trotzdem lassen sich mit der oben beschriebenen Vorrichtung Daten auch bei hoher Übertragungsrate einwandfrei diskriminieren. Das Bohrlich kann z. B. mit Salzwasser gefüllt sein. Das vorstehend erwähnte Kabel bietet einen guten Schutz gegen Beschädigungen der Isolierung.

Die Erfindung wird nachfolgend anhand von Ausführungsbeispielen näher erläutert, die in der Zeichnung dargestellt sind und aus denen sich weitere Merkmale und Vorteile der vorliegenden Erfindung ergeben.

Es zeigen:

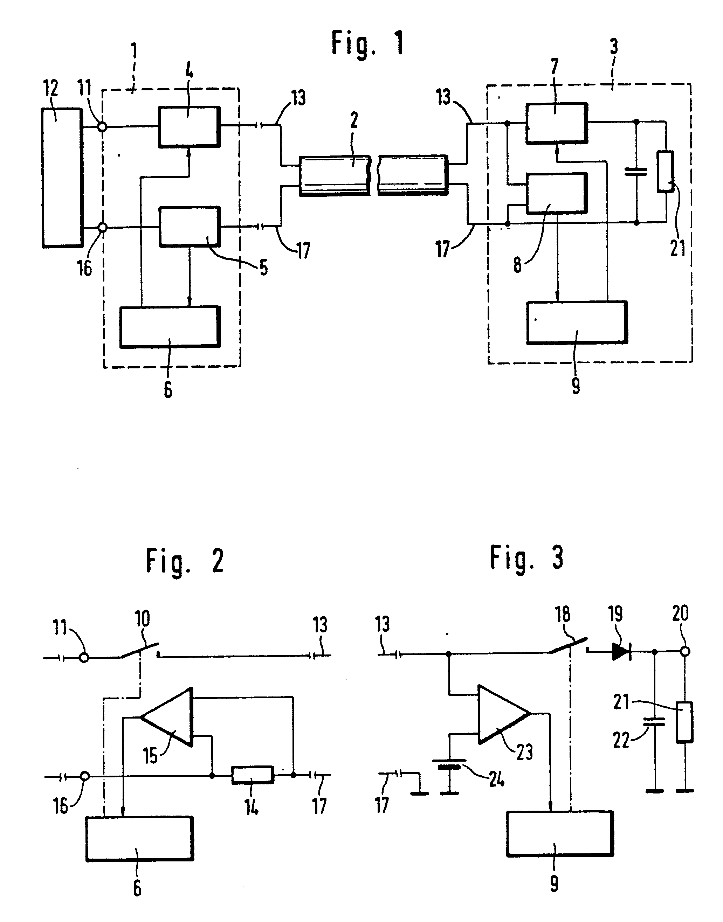

Fig. 1    ein Blockschaltbild von jeweils über Tage und unter Tage angeordneten Sende- und Empfangseinrichtungen, die über ein Zweileiterkabel miteinander verbunden sind,

Fig. 2    ein Blockschaltbild des über Tage angeordneten Senders und Empfängers,

Fig. 3    ein Blockschaltbild einer ersten Ausführungsform des unter Tage angeordneten Senders und Empfängers,

Fig. 4    ein Blockschaltbild einer zweiten Ausführungsform des unter Tage angeordneten Senders und Empfängers,

Fig. 5    ein Schaltbild der über Tage angeordneten Sende- und Empfangseinrichtung,

Fig. 6    ein Schaltbild der unter Tage angeordneten Sende- und Empfangseinrichtung.

Eine über Tage angeordnete Sende- und Empfangseinrichtung 1 ist am Ende eines Kabels 2 angeschlossen, das eine Zweidrahtverbindung darstellt. Das Kabel 2 ist auf eine nicht dargestellte Trommel aufwickelbar. Das Kabel ist ein armiertes Stahlseil mit einem isolierten Kupferleiter. Das andere Ende des Kabels 2 ist mit einer Sende- und Empfangseinrichtung 3 verbunden, die in einem am Stahlseil befestigten, nicht dargestellten Gehäuse angeordnet ist. In diesem Gehäuse bzw. an dessen Außenseite befinden sich Meßwertgeber, beispielsweise für Temperatur, Druck u. dgl. Die von diesen Meßwertgebern erzeugten Meßwerte sollen über das Kabel 2 zu der über Tage angeordneten Sende- und Empfangseinrichtung 1 übertragen werden. Die Sende- und Empfangseinrichtung 3 wird mit dem Kabel 2 in ein Bohrloch eingeführt, bei dem es sich vorzugsweise um eine Tiefbohrung von 10 000m Tiefe oder mehr handelt. Das Kabel ist bezüglich seiner Länge auf eine maximale Bohrtiefe ausgelegt.

In der übertage angeordneten Sende-, Empfangseinrichtung 1 ist ein in der über Tage angeordneten Sende- und Empfangseinrichtung 1 sind ein Sender 4 und ein Empfänger 5, die jeweils mit einer Steuer- und Auswerteinheit 6 verbunden sind, angeordnet. In entsprechender Weise ist in der Sende- und Empfangseinrichtung 3 ein Sender 7 und ein Empfänger 8 vorgesehen, die an eine Steuer- und Auswerteinheit 9 angeschlossen sind. Die Steuer- und Auswerteinheit 6 betätigt den Sender 4 entsprechend den zu der Sende- und Empfangseinrichtung 3 übertragenen Daten, bei denen es sich vorzugsweise um Befehle handelt, mit denen die Steuer- und Auswerteinrichtung 9 zur Übertragung der Meßwerte aufgerufen wird. Die übertragenen Meßwerte werden im Empfänger 5 erfaßt und an die Steuer- und Auswerteinheit 6 weitergeleitet. Die Steuer- und Auswerteinheit 9 betätigt den Sender 7 vorzugsweise gemäß den zu übertragenden Meßwerten. Es können jedoch auch Daten über den Zustand der Schaltungselemente der Sende- und Empfangseinrichtung 3 übertragen werden. Die von der Sende- und Empfangseinrichtung 1 kommenden Daten werden mit dem Empfänger 8 erfaßt und an die Steuer- und Auswerteinrichtung 9 weitergeleitet.

Bei dem Sender 4 handelt es sich vorzugsweise um einen kontaktlosen Schalter 10, der einerseits mit einem (beispielsweise positiven) Pol 11 einer Energiequelle 12 und andererseits mit einer Leitung 13 des Kabels 2 verbunden ist. Der Empfänger 5 besteht aus einem Stromfühler 14, der mit einem Verstärker 15 verbunden ist, dem eine nicht dargestellte Impulsformerstufe nachgeschaltet sein kann. Der als Widerstand ausgebildete Stromfühler 14 ist einerseits mit dem zweiten Pol 16 der Energiequelle 12 und andererseits mit der anderen Leitung 17 des Kabels 2 verbunden.

Der Sender 7 ist ebenfalls als vorzugsweise kontaktloser Schalter 18 ausgebildet, der einerseits mit der Leitung 13 und andererseits über eine bezüglich der Polarität der Spannung am Pol 11 in Durchlaßrichtung gepolte Diode 19 mit einem Betriebsspannungsanschluß 20 für die in der Sende- und Empfangseinrichtung 3 angeordneten Verbraucher verbunden ist. Diese Verbraucher, der Sender 7, der Empfänger 8, die Steuer- und Auswerteinrichtung 9 und die nicht dargestellten Meßwertgeber, sind durch einen Widerstand 21 symbolisiert. Mit dem Betriebsspannungsanschluß 20 ist ferner ein Energiespeicher, bestehend aus einem Kondensator 22, einem Akkumulator oder einer Batterie verbunden. Der Empfänger 8 besteht aus einem Schwellwertdetektor 23, einem Differenzverstärker, der mit einem Eingang an die Leitung 13 und mit dem anderen Eingang an eine Referenzspannungsquelle 24 gelegt ist. Der Ausgang des Schwellwertdetektors 23 ist mit der Steuer- und Auswerteinrichtung 9 verbunden. Der Schalter 18 wird entsprechend den zu sendenden Daten gesteuert.

Eine andere Ausführungsform einer Sende- und Empfangseinrichtung 3 enthält einen von der Steuer- und Auswerteinrichtung 9 betätigbaren, vorzugsweise kontaktlosen Schalter 25, der die beiden Leitungen 13, 17 überbrückt. Die Leitung 13 ist mit der Diode 19, dem Kondensator 22, dem Betriebsspannungsanschluß 20 und dem Widerstand 21 verbunden. Der Schwellwertdetektor 23 ist ebenfalls an die Leitung 13 und an die Referenzspannungsquelle 24 angeschlossen.

Daten werden auf dem Kabel 2 in beiden Richtungen übertragen. Vom Sender 4 werden Daten durch aufeinanderfolgende stromführende und stromlose Zeitabschnitte übertragen, d. h. in Form von Impulsen und Impulspausen. Vorzugsweise werden die Daten in impulscodemodulierter Form übertragen. Entsprechend den zu übertragenden Daten wird der Schalter 10 geöffnet und geschlossen. Während der Schließzeit des Schalters 10 wird der Pol 11 an die Leitung 13 gelegt. Dies bedeutet, daß die Energiequelle 12 die Leitung 13 unmittelbar speist. Es wird daher ein Impuls übertragen, mit dem die Energie für den Betrieb der im Bohrloch angeordneten elektrischen Kreise übertragen wird. Ein Teil dieser Energie wird im Kondensator 22 gespeichert. Die Daten werden übertragen, indem der Schalter 10 geöffnet wird. Das mit dem Sender 4 eingespeiste Telegramm bzw. die Impulsfolge wird im Empfänger 8 anhand der stromlosen Zeitabschnitte erfaßt. In den stromlosen Zeitabschnitten koppelt die Diode 19 den Kondensator 22 von der Leitung 13 ab. Der Schwellwertdetektor 23 stellt über die auf der Leitung 13 anstehenden Potentiale fest, ob Strom eingespeist wird oder nicht. Er gibt entsprechende binäre Signale an die Steuer- und Auswerteinrichtung 9 weiter, die die empfangenen Daten decodiert und entsprechende Steuerungsmaßnahmen, z. B. die Übertragung von Meßwerten mittels des Senders, veranlaßt. Durch das Öffnen und Schließen des Schalters 18 ergeben sich stromlose und stromführende Zeitabschnitte, wobei vorausgesetzt wird, daß der Schwellwertdetektor 23 durch seinen Eingangswiderstand nur einen vernachlässigbar kleinen Strom über die Leitung 13 erhält, der sich mit einem zum Widerstand 14 parallel geschalteten Potentiometer kompensieren läßt. Die stromlosen und stromführenden Zeitabschnitte bilden Impulse und Impulspausen, die vom Empfänger 5 mittels des Stromfühlers 14 festgestellt werden. Der Verstärker 15 formt entsprechende binäre Signale, die von der Steuer- und Auswerteinrichtung 6 verarbeitet werden. Während der stromlosen Zeitabschnitte versorgt der Kondensator 22 die Verbraucher 21 in der Sende- und Empfangseinrichtung 3.

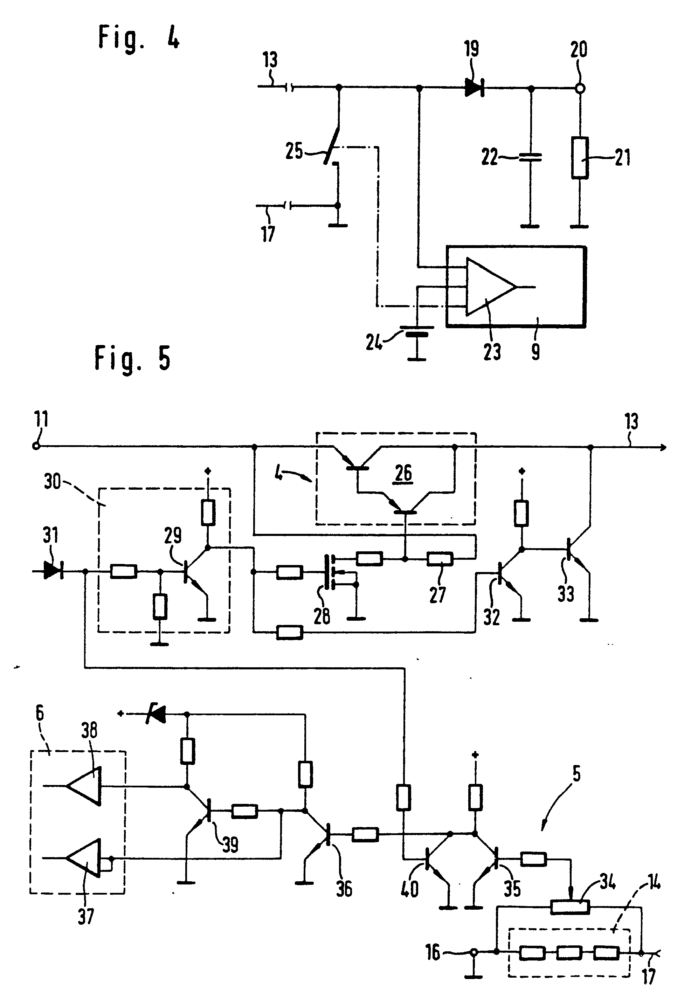

Bei der in Fig. 4 dargestellten Ausführungsform einer Sende-, Empfangseinrichtung 3 wird der Schalter 25 in Übereinstimmung mit den zu übertragenden Daten abwechselnd geöffnet und geschlossen. Dabei fließen über die Leitungen 13, 17 entweder die niedrigeren Betriebsströme für die Verbraucher in der Sende- und Empfangseinrichtung 3 oder Kurzschlußströme. Der Stromfühler 14 erfaßt diese Ströme über ihre unterschiedlichen Amplituden. Entsprechend diesen Amplituden werden Impulse und Impulspausen gebildet und an die Steuer- und Auswerteinheit 6 weitergeleitet.

Aus der in Fig. 5 dargestellten Anordnung des Senders 4 und des Empfängers 5 ist zu ersehen, daß der Schalter 10 aus einem Darlington-Transistor 26 besteht, dessen Basis über einen Widerstand 27 mit dem Pol 11 verbunden ist. Statt eines Darlington-Transistors 26 kann auch ein p-Kanal-Mosfet für hohe Ströme und Spannungen verwendet werden. Weiterhin ist die Basis über einen nicht näher bezeichneten Widerstand mit der Drain-Elektrode eines MOS-Feldeffekttransistors 28 verbunden, der über eine einen npn-Transistor 29 enthaltende Verstärkerstufe 30 und einer in Reihe zu dessen Eingang gelegter Diode 31 mit der Steuer- und Auswerteinrichtung 6 verbunden ist. Der Transistor 29 speist weiterhin einen npn-Transistor 32, dessen Kollektor über einen nicht näher bezeichneten Widerstand an Betriebspotential und an die Basis eines zusätzlichen npn-Transistors 33 gelegt ist, dessen Kollektor-Emitter-Strecke zwischen die Leitung 13 und Masse gelegt ist.

Wenn die Steuer- und Auswerteinrichtung 6 kein positives Steuersignal über die Diode 31 einspeist sind die Transistoren 29, 32 und 33 nicht-leitend. Der Feldeffekttransistor 28 ist leitend und steuert den Darlington-Transistor 6 ebenfalls leitend. Gibt die Steuer- und Auswerteinrichturg 6 ein positives Steuersignal an die Diode 31 aus, dann wird der Transistor 29 leitend, wodurch der Feldeffekttransistor 28 und der Darlington-Transistor 26 nicht-leitend werden, während die Transistoren 32, 33 leitend werden. Dies hat den Vorteil, daß sich die Leitung 13 nach dem Übergang des Darlington-Transistors 26 in den hochohmigen Zustand über den leitend gesteuerten Transistor 33 sehr schnell entladen kann. Damit läßt sich eine höhere Datenübertragungsrate erreichen.

Der aus drei in Reihe geschalteten, nicht näher bezeichnete Widerständen bestehende Stromfühler 14 ist zu einem Potentiometer 34 parallel geschaltet, dessen Abgriff über einen dicht näher bezeichneten Widerstand mit der Basis eines npn-Transistors 35 verbunden ist, dessen Kollektor über einen weiteren Widerstand mit der Basis eine npn-Transistors 36 verbunden ist. Der Kollektor des Transistors 36 ist über die Reihenschaltung eines Widerstandes und einer Zener-Diode an Betriebspotential gelegt. Durch die Zener-Diode wird die Spannung auf den logischen Pegel eines an den Kollektor des Transistors 36 angeschlossenen logischen Gatters 37 herabgesetzt. Ein weiteres Gatter 38 ist über den Kollektor eines zusätzlichen Transistors 39, der ebenso wie der Transistor 36 mit Spannung versorgt wird, an den Kollektor des Transistors 36 angeschlossen.

Wenn über die Leitung 17 Strom fließt, ist der Transistor 35 leitend, wodurch der Transistor 36 nicht-leitend gesteuert ist. Am Eingang des Gatters 37 steht ein hohes Potential an, was ein hohes Potential am Ausgang des Gatters 37 hervorruft. Dieses hohe Potential ist z. B. einer binären "1" zugeordnet. Der Transistor 39 ist leitend, wodurch über das Gatter 38 ein Potential mit der entgegengesetzten binären Wertigkeit hervorgerufen wird. Fließt über die Leitung 17 kein Strom, dann ist der Transistor 35 nicht-leitend, wodurch der Transistor 36 leitend und der Transistor 39 nicht-leitend gesteuert werden. Dies bewirkt eine Umkehr der binären Signale an den Ausgängen der Gatter 37, 38. Die Kathode der Diode 31 ist mit der Basis eines Transistors 40 verbunden, dessen Kollektor-Emitter-Strecke parallel zu derjenigen des Transistors 35 gelegt ist. Wenn der Darlington-Transistor 26 über die Steuer- und Auswerteinrichtung 6 nicht-leitend gesteuert wird, legt der Transistor 40 die Basis des Transistors 36 auf Massepotential, so daß die Gatter 37, 38 definierte Ausgangspotentiale führen.

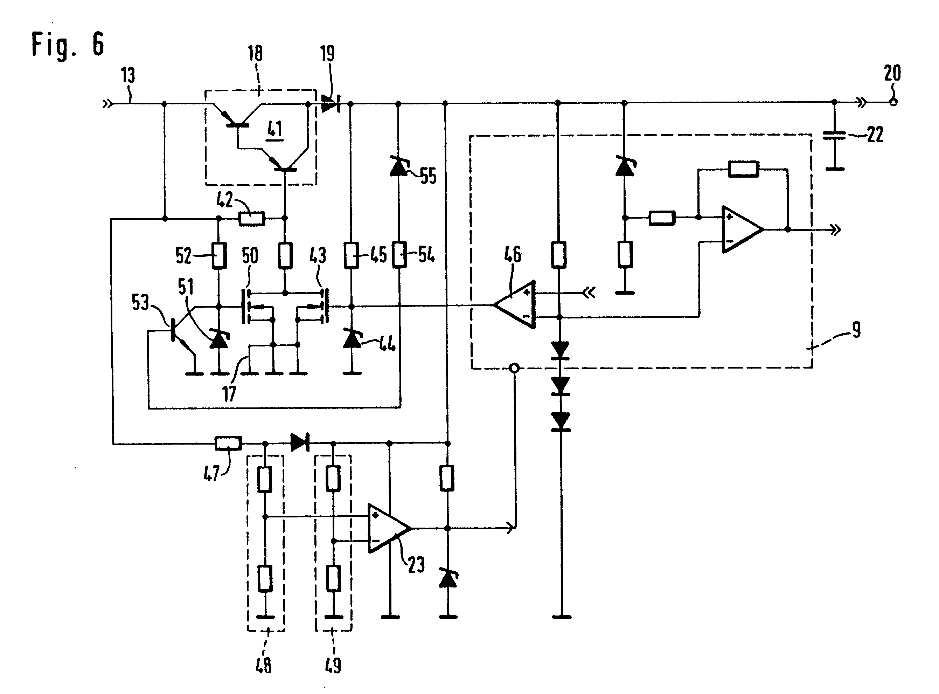

Der Schalter 18 der Untertageageanordnung gemäß Fig. 6 besteht aus einem Darlington-Transistor 41, dessen Basis über einen Widerstand 42 an die Leitung 13 gelegt ist. Statt des Transistors 41 kann ein p-Kanal-Mosfet für z. B. 10 H und 300 V benutzt werden. Weiterhin ist die Basis des Darlington-Transistors 41 über einen nicht näher bezeichneten Widerstand mit der Drain-Elektrode eines MOS-Feldeffekttransistors 43 verbunden, dessen Source-Elektrode über die Leitung 17 an Masse gelegt ist. Die Gate-Elektrode des Feldeffekttransistors 43 ist mit einer Zener-Diode 44 verbunden, die über einen Widerstand 45 an die Kathode der Diode 19 gelegt ist. Ferner ist die Gate-Elektrode des Feldeffekttransistors 43 mit dem Ausgang eines in der Steuer- und Auswerteinrichtung 9 angeordneten Differenzverstärkers 46 verbunden.

Die Leitung 13 ist ferner über einen Widerstand 47 an einen aus zwei Widerständen bestehenden ersten Spannungsteiler 48 angeschlossen, dessen Abgriff mit einem Eingang des Schwellwertdetektors 23 verbunden ist, dessen zweiter Eingang vom Abgriff eines zweiten Spannungsteilers 49 gespeist wird, der mit dem Betriebsspannungsanschluß 20 verbunden ist. Der Widerstand 47 und der Spannungsteiler 48 sind als Überspannungsschutz vorgesehen. Wenn bei geschlossenem über Tage angeordnetem Schalter 10 auf der Leitung 13 ein hohes Potential ansteht, weist der Schwellwertdetektor 23 entsprechend dem Verhältnis der beiden Spannungsteiler 48, 49 einen vorgegebenen Schaltungszustand auf. Durch Öffnen des Schalters 10 sinkt das Potential auf der Leitung 13 ab, so daß der Schwellwertdetektor 23 in einen anderen Schaltungszustand übergeht. Auf diese Weise werden die durch Betätigung des Schalters 10 des Senders 4 übertragenen Impulse festgestellt und an die Steuer- und Auswerteinrichtung 9 weitergeleitet.

Wenn die Sende- und Empfangseinrichtung 3 auf Sendebetrieb geschaltet wird, wird die Gate-Elektrode des Feldeffekttransistors 43 auf niedriges Potential gelegt, bei dem der Feldeffekttransistor 43 sperrt. Hierdurch wird der Darlington-Transistor 41 in den nichtleitenden Zustand versetzt. Wenn der Darlington-Transistor 41 leitend ist und der Ausgang des Differenzverstärkers 46 hohes Potential führt, ist der Feldeffekttransistor 43 ebenfalls leitend. Bei Abwesenheit eines entsprechenden Steuersignals an der Steuer- und Auswerteinrichtung 3 wird der Darlington-Transistor 41 über den Feldeffekttransistor 43 leitend gesteuert.

Ein Feldeffekttransistor 50 ist mit der Drainsourcestrecke parallel zum Feldeffekttransistor 43 geschaltet. Die Gate-Elektrode des Feldeffekttransistors 50 ist mit einer Zener-Diode 51 verbunden die über einen Widerstand 52 an die Leitung 13 gelegt ist. Zur Zener-Diode 51 ist die Kollektor-Emitter-Strecke eines Transistors 53 parallel geschaltet, dessen Basis über die Reihenschaltung eines Widerstands 54 und einer Zener-Diode 55 mit dem Betriebsspannungsanschluß 20 verbunden ist. Die aus den Bauelementen 50 bis 55 bestehende Schaltung sorgt dafür, daß bei langsam steigender Eingangsspannung der Darlington-Transistor 41 so lange geöffnet bleibt, bis die übrige Elektronik eine ausreichende Betriebsspannung hat. Es handelt sich also um eine Anfahrschaltung.

Die isolierte Kupferseele des Kabels 2 ist vorzugsweise die Leitung 13, während die Leitung 17 das Stahlseil des Kabels 2 ist.

**Bezugszeichenliste:**

1 Sende- und Empfangseinrichtung
2 Kabel
3 Sende- und Empfangseinrichtung
4 Sender
5 Empfänger
6 Steuer- und Auswerteinrichtung
7 Sender
8 Empfänger
9 Steuer- und Auswerteinrichtung
10 Schalter
11 Pol
12 Energiequelle

13 Leitung
14 Stromfühler
15 Verstärker
16 Pol
17 Leitung
18 Schalter
19 Diode
20 Betriebsspannungsanschluß
21 Widerstand
22 Kondensator
23 Schwellwertdetektor
24 Referenzspannungsquelle
25 Schalter
26 Darlington-Transistor
27 Widerstand
28 Feldeffekttransistor
29 Transistor
30 Verstärkerstufe
31 Diode
32 Transistor
33 Transistor
34 Potentiometer
35 Transistor
36 Transistor
37 Gatter
38 Gatter
39 Transistor
40 Transistor
41 Darlington-Transistor
42 Widerstand
43 Feldeffekttransistor
44 Zener-Diode
45 Widerstand
46 Differenzverstärker
47 Widerstand
48 Spannungsteiler
49 Spannungsteiler
50 Feldeffekttransistor
51 Zener-Diode
52 Widerstand
53 Transistor
54 Widerstand
55 Zener-Diode

**Patentansprüche**

1. Verfahren zur Datenübertragung zwischen einer in einem Bohrloch angeordneten Sende- und Empfangseinrichtung (3) und einer über Tage angeordneten Sende- und Empfangseinrichtung (1) in beiden Übertragungsrichtungen über eine Zweidrahtleitung in einem Kabel (2), dadurch gekennzeichnet, daß das Kabel (2) nur eine Zweidrahtleitung (13, 17) aufweist, über die die Daten und die zum Betrieb notwendige Energie zu der im Bohrloch angeordneten Sende- und Empfangseinrichtung (3) während aufeinanderfolgender, im wesentlichen stromführender Zeitabschnitte, die von im wesentlichen stromlosen Zeitabschnitten getrennt sind, übertragen werden, daß während der stromführenden Zeitabschnitte ein Teil der übertragenen Energie in der im Bohrloch angeordneten Sende- und Empfangseinrichtung (3) für die stromlosen Zeitabschnitte gespeichert wird, und daß die Daten von der im Bohrloch angeordneten Sende- und Empfangseinrichtung (3) zu der über Tage angeordneten Sende- und Empfangseinrichtung (1) durch Unterbrechung des Stromflusses in der Zweidrahtleitung (13, 17) oder durch Kurzschließen der Enden der Zweidrahtleitung (13, 17) und in umgekehrter Richtung durch Unterbrechung des in die Zweidrahtleitung (13, 17) eingespeisten Stroms übertragen werden.

2. Verfahren nach Anspruch 1, dadurch gekennzeichnet, daß die Daten durch pulscodemodulierte Impulse übertragen werden.

3. Vorrichtung zur Datenübertragung zwischen einer in einem Bohrloch angeordneten Sende- und Empfangseinrichtung (3) und einer über Tage angeordneten Sende- und Empfangseinrichtung (1) in beiden Übertragungsrichtungen über eine Zweidrahtleitung in einem Kabel (2), dadurch gekennzeichnet, daß in der über Tage angeordneten Sende- und Empfangseinrichtung (1) zumindest zwischen einem Pol (11) der Energiequelle (12) und einer Leitung (13) der Zweidrahtleitung (13, 17) ein von einer Steuer- und Auswerteinrichtung (6) betätigbarer Schalter (10) und zumindest zwischen einem Pol (16) der Energiequelle (12) und einer Leitung (17) der Zweidrahtleitung (13, 17) ein mit einem Schwellwertdetektor verbundener Stromfühler (14) angeordnet sind, daß in der im Bohrloch angeordneten Sende- und Empfangseinrichtung (3) zumindest zwischen dem Ende einer Leitung (13) und der Zweidrahtleitung und einer Diode (19) die mit einem Kondensator (22) und einem Betiebsspannungsanschluß (20) für die Verbraucher in der Sende- und Empfangseinrichtung (3) verbunden ist, ein weiterer Schalter (18) oder zwischen den Enden der beiden Leitungen (13, 17) der Zweidrahtleitung ein Schalter (25) angeordnet ist, daß die Schalter (18, 25) von einer Steuer- und Auswerteinrichtung (9) betätigbar sind und daß mit zumindest einer Leitung (13) ein Schwellwertdetektor (23) verbunden ist.

4. Vorrichtung nach Anspruch 3, dadurch gekennzeichnet, daß die Schalter (10, 18, 25) kontaktlos ausgebildet sind.

5. Vorrichtung nach Anspruch 3 oder 4, dadurch gekennzeichnet, daß die Schalter (18, 25) Darlington-Transistoren (26, 41) sind, die mit ihrer Basis jeweils an einen Feldeffekttransistor (28, 43) angeschlossen sind, dessen Gate-Elektrode mit der Steuer- und Auswerteinrichtung (6, 9) verbunden ist.

6. Vorrichtung nach Anspruch 3, dadurch gekennzeichnet, daß die Schalter (18) Liestungsfeldeffekttransistoren sind, die mit ihrer Basis jeweils an einen Feldeffekttransistor angeschlossen sind, dessen Gate-Elektrode mit der Steuer- und Auswerteinrichtung (6, 9) verbunden ist.

7. Vorrichtung nach einem der Ansprüche 3 bis 6, dadurch gekennzeichnet, daß der Stromfühler (14) aus einem Widerstand oder aus mehreren in Reihe geschalteten Widerständen besteht, die an die Steuer- und Auswerteinrichtung (6) angeschlossen sind.

8. Vorrichtung nach Anspruch 7, dadurch gekennzeichnet, daß zu den Widerständen jeweils ein Potentiometer (34) parallel geschaltet ist, dessen Abgriff an eine Impulsformerstufe (35, 36) angeschlossen ist, die an die Steuer- und Auswerteinrichtung (6) angeschlossen ist.

9. Vorrichtung nach einem der Ansprüche 3 bis 8, dadurch gekennzeichnet, daß der Schwellwertdetektor (23) in der im Bohrloch angeordneten Sende- und Empfangseinrichtung (3) ein Differenzverstärker ist, dessen einer Eingang über einen Spannungsteiler (48) mit einer Leitung (13) und dessen anderer Eingang über einen Spannungsteiler (49) mit dem Betriebsspannungsanschluß (20) verbunden ist.

10. Vorrichtung nach einem der Ansprüche 3 bis 9, dadurch gekennzeichnet, daß das Kabel (2) ein armiertes Stahlseil mit einem isolierten Kupferleiter ist, der eine der Leitungen (13, 17) ist, während die andere Leitung (17) das Stahlseil ist.

## Claims

1. A process for the communication of data between a transmitter and a receiver means (3) disposed in a bore hole and a transmitter and receiver means (1) disposed above ground in either direction of communication through a two-wire circuit in one cable (2), characterized in that the cable (2) exhibits but one two-wire circuit (13, 17) through which the data and the energy required for operation are communicated to the transmitter and receiver means (3) located in the bore hole during successive and substantially current-carrying periods of time separated from substantially de-energized periods of time, that, during the current-carrying periods of time, a part of the energy transferred, in the transmitter and receiver means (3) located in the bore hole, is stored for the de-energized periods of time, and that the data is communicated from the transmitter and receiver means (3) located in the bore hole to the transmitter and receiver means (1) located above surface, through interruption of the current flow in the two-wire circuit (13, 17) or through short-circuiting of the ends of the two-wire conduit (13, 17) and, in opposite direction, through interruption of the current fed to the two-wire conduit (13, 17).

2. A process according to claim 1, characterized in that the data is communciated through pulse code-modulated pulses.

3. A process for the communciation of data between a transmitter and a receiver means (3) located in a bore hole and a transmitter and receiver means (1) located above surface in either direction of communication through a two-wire circuit in a cable (2), characterized in that disposed in the transmitter and receiver means (1) located above surface at least between a pole (11) of the energy source (12) and a conduit (13) of the two-wire circuit (13, 17) are a switch (10) actuable by a control and analyzing means (6) and, at least between a pole (16) of the energy source (12) and a conduit (17) of the two-wire conduit (13, 17), a current sensor (14) connected to a threshold detector, that disposed in the transmitter and receiver means (3) located in the bore hole, at least between the end of a conduit (13) and the two-wire circuit and a diode (19) in communication with a capacitor (22) and a working voltage connection (20) for the consumer in the transmitter and receiver means (3), is another switch (18), or between the ends of the two conduits (13, 17) of the two-wire circuit, a switch (25), that the switches (18, 25) are actuable by a control and analyzing means (9), and that a threshold detector (23) is in communication with at least one conduit (13).

4. An apparatus according to claim 3, characterized in that the switches (10, 18, 25) are of a contact-free configuration.

5. An apparatus according to claims 3 or 4, characterized in that the switches (18, 25) are Darlington-type transistors (26, 41) which with the basis thereof are respectively in communication with a field-effect transistor (28, 43) the gate electrode of which is connected to the control and analyzing means (6, 9).

6. An apparatus according to claim 3, characterized in that the switches (18) are power field effect transistors which respectively with the basis thereof are in communciation with a field effect transistor the gate electrode of which is in communication with the control and analyzing means (6, 9).

7. An apparatus according to any one of claims 3 to 6, characterized in that the current sensor (14) is made up of a resistor or of a plurality of series-connected resistors in communication with the control and analyzing means (6).

8. An apparatus according to claim 7, characterized in that connected in parallel to the resistors is respectively one potentiometer (34) the tap of which is in communication with a pulse forming stage (35, 36) connected to the control and analyzing means (6).

9. An apparatus according to any one of claims 3 to 8, characterized in that the threshold detector (23) in the transmitter and receiver means (3) located in the bore hole, is a differential amplifier the one input of which, through a voltage divider (48), is in communication with a conduit (13) and the other input of which, through a voltage divider (49), is in communication with the working voltage connection (20).

10. An apparatus according to any one of claims 3 to 9, characterized in that the cable (2) is a reinforced steel cable exhibiting an insulated copper conductor forming one of the conduits (13, 17), whereas the other conduit (17) is the steel cable.

## Revendications

1. Procédé à communiquer de données entre un moyen émetteur-récepteur (3) disposé dans une forure et un moyen émetteur-récepteur (1) disposé au jour dans les deux sens de communication par l'intermédiaire d'une terminaison à deux fils dans un câble (2),
caractérisé en ce que le câble (2) ne comporte qu'une terminaison à deux fils (13, 17) par l'intermédiaire de laquelle les données et l'énergie réquise par l'opération sont transférées au moyen émetteur-récepteur (3) pendant des sections de temps successives essentiellement parcourues par le courant et séparées par des sections de temps essentiellement non parcourues par le courant,
que pendant les sections de temps parcourues par le courant, une partie de l'énergie transférée est stockée dans le moyen émetteur-récepteur (3) pour les sections de temps non-parcourues par le courant disposé dans la forure, et que les données sont transférées du moyen émetteur-récepteur (3) disposé dans la forure au moyen émetteur-récepteur (1) disposé au jour par l'interruption de continuité de courant dans la terminaison à deux fils (13, 17) our par court-circuit des extrémités de la terminaison (13, 17) et, en sens invers, par l'interruption du courant alimenté dans la terminaison à deux fils (13, 17).

2. Procédé selon la revendication 1,
caractérisé en ce que les données sont transférées par des impulsations modulées par de codes d'impulsations.

3. Appareil à communiquer de données entre un moyen émetteur-récepteur (3) disposé dans une forure et un moyen émetteur-récepteur (1) disposé au jour dans les deux sens de communication par l'intermédiaire d'une terminaison à deux fils dans un câble (2),
caractérisé en ce que dans le moyen émetteur-récepteur (1) disposé au jour au moins entre un pôle (11) de la source d'énergie (12) et une conduite (13) de la terminaison à deux fils (13, 17) est disposé un commutateur (10) actionné par un mécanisme à commande et l'évaluation et au moins entre un pôle (16) de la source d'énergie (12) et une conduite (17) de la terminaison à deux fils (13, 17) est disposé un palpeur de courant (14) raccordé à un détecteur seuil,
que dans le moyen émetteur-récepteur (3) disposé dans la forure, au moins entre l'extrémité d'une conduite (13) et de la terminaison à deux fils et une diode (19) raccordée à un condensateur (22) et une connexion voltage de régime (20) pour les consommateurs dans le moyen émetteur-récepteur (3), est disposé un autre commutateur (18), ou entre les extrémités des deux conduites (13, 17) de la terminaison d deux fils est disposé un commutateur (25),
que les commutateurs (18, 25) sont actionnables par un mécanisme à commande et l'évaluation (9) et qu'un détecteur seuil (23) est raccordé au moins à une conduite (13).

4. Appareil selon la revendication 3,
caractérisé en ce que les commutateurs (10, 18, 25) sont sous forme sans contact.

5. Appareil selon les revendications 3 ou 4,
caractérisé en ce que les commutateurs (18, 25) sont des transistors de Darlington (26, 41) raccordés avec leurs bases chaque fois à un transistor d'effet par champs (28, 23) l'ectrode de gate duquel est raccordé à un mécanisme à commande et l'évaluation (6, 9).

6. Appareil selon la revendication 3,
caractérisé en ce que les commutateurs (18) sont des transistors d'effet par champs à puissance raccordés avec leurs bases chaque fois à un transistor d'effet par champs l'ectrode de gate duquel est raccordé à un mécanisme à commande et l'évaluation (6, 9).

7. Appareil selon l'une des revendications 3 à 6,
caractérisé en ce que le palpeur de courant (14) consiste d'une résistance ou de résistances plusieurs montées en série raccordées au mécanisme à commande et l'évaluation (6).

8. Appareil selon la revendication 7,
caractérisé en ce qu'un potentiomètre (34) chaque fois est monté en parallèle aux résistances, prélèvement duquel est raccordé à une phase formant d'impulsation (35, 36) raccordé au mécanisme à commande et l'évaluation (6).

9. Appareil selon l'une des revendications 3 à 8,
caractérisé en ce que le détecteur seuil (23) dans le moyen émetteur et récepteur (3) disposé dans la forure est un amplificateur différentiel l'une entrée duquel par l'intermédiaire d'une diviseur de voltage (48) est raccordée à une conduite (13) et l'autre entrée duquel est raccordée par l'intermédiaire d'un diviseur de voltage (49) à connexion voltage de régime (20).

10. Appareil selon l'une des revendications 3 à 9,
caractérisé en ce que le câble (2) est un câble en acier armé ayant un conducteur en cuivre isolé formant l'une des conduites (13, 17) tandisque l'autre conduite (17) est le câble en acier.

## Fig. 1

## Fig. 2

## Fig. 3

Fig. 4

Fig. 5

Fig. 6

EP 0 195 100 B1